# EUROPEAN PATENT SPECIFICATION

(11) **EP 3 316 564 B1**
(45) Date of publication and mention of the grant of the patent: **03.04.2019**
(21) Application number: 16306394.4
(22) Date of filing: 25.10.2016
(51) Int. Cl.: H04M 11/06, H04M 19/00

(54) **POWER-EFFICIENT DECODING ARRANGEMENT FOR RPF OPERATION**
LEISTUNGSEFFIZIENTE DECODIERUNGSANORDNUNG ZUM RPF-BETRIEB
DISPOSITIF BASSE CONSOMMATION DE DÉCODAGE D'OPÉRATION RPF

(43) Date of publication of application: 02.05.2018
(73) Proprietor: Alcatel Lucent, 91620 Nozay (FR)
(72) Inventor: HILLAERT, Bart, 2018 Antwerpen (BE)
(74) Representative: Nokia EPO representatives

(56) References cited:
- EP-A1- 3 076 682
- WO-A1-2005/043880
- ALCATEL-LUCENT BELL NV: "POTS RCR Protocol [PRP]", ETSI DRAFT; ATTMTM6(16)000040R1, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. - ATTM TM6 - Wireline Access Network Systems 14 March 2016 (2016-03-14), pages 1-14, XP014269680, Retrieved from the Internet: URL:www.docbox.etsi.org\ATTM\TM6\05-CONTRI BUTIONS\2016\ATTMTM6(16)000040r1_POTS_RCR_ Protocol__PRP_.docx [retrieved on 2016-03-14]

## Description

### Technical Field of the Invention

The present invention relates to provisioning of new broadband communication services over copper plants.

### Technical Background of the invention

Distribution Point Units (DPU) serving subscribers with new copper access technologies for broadband communication services (e.g., G. fast) are typically deployed at a maximal distance of a few hundreds meters from the subscriber premises (e.g., up to 200 or 400m for G. fast) in order to achieve the expected high data rates (e.g., up to 1 Gbps as aggregated data rates for G.fast). This means that the DPU will be located closer to the subscriber premises compared to current deployments. A local power supply to power the DPU is not always available at the DPU location. Therefore operators are requesting methods to feed the DPU via Reverse Power Feeding (RPF).

A Power Sourcing Equipment (PSE) installed at the subscriber premises provides a DC current to power the DPU via the same copper pair as used for broadband communication. The PSE is powered by the AC mains of the household. A Power Supply Unit (PSU) inside the DPU converts the DC voltage inserted by the PSE over the copper pair, typically 57V minus the DC voltage drop caused by the DC resistance along the copper pair, to a number of lower DC voltages used inside the DPU (e.g., 12v, 5V, 3v3, etc).

It is expected that operators will gradually upgrade their subscribers from a legacy communication service to the new broadband communication service provided by the DPU. These legacy communication services typically refer to the various Digital Subscriber Line flavors (xDSL), with or without the presence of Plain old Telephone System (POTS). The legacy communication services are typically deployed from a Central Office (CO) cabinet, so are for instance the ADSL or ADSL2+ communication services, from a Remote Unit (RU), so are for instance the VDSL2 communication services, or from a Local Exchange (LEX), so are for instance the POTS communication services.

At a given time, a particular subscriber is upgraded from the legacy communication service deployed from the legacy network equipment over the (long) legacy copper pair to the new broadband communication service deployed from the DPU over the (short) terminal segment of the copper pair.

To this end, a bypass switch is provisioned within or besides the DPU. The bypass switch typically consists of a persistent relay with two switching states, namely:
- the bypass state wherein the end user is transparently connected through the DPU to the legacy network equipment via the (long) legacy copper pair for support of the legacy communication service; or
- the termination state wherein the (short) terminal segment of the copper pair (i.e., the segment spanning from the DPU down to the subscriber premises) is connected to a transceiver of the DPU for operation of the new broadband communication service and to the PSU of the DPU for DC power extraction, while the network segment of the copper pair (i.e., the segment spanning from the DPU up to the legacy network equipment) is disconnected and open-circuited at the DPU side.

At the given time, the bypass relay shall thus be switched from the bypass state to the termination state for that particular subscriber. Preferably, this is accomplished without any human interaction (zero-touch installation).

Yet, there are a number of technical hurdles to overcome during the service upgrade.

Initially, when the very first user switches from a legacy communication service to the new broadband communication service, the DPU is unpowered since that user is also the very first user to feed the DPU. Hence, there is no power available at the DPU to switch the bypass relay either.

Furthermore, when a POTS service is present on the copper pair, no DC feed can be inserted on the copper pair by the PSE as this would conflict with the DC power source from the LEX (typically 48v, 53V or 60V). Although the DPU can directly get power from the latter, the DPU can only drain a little current during the ONHOOK state (typically from a few hundreds µA up to a few mA) so as not to trigger an ONHOOK -> OFFHOOK state transition and the insertion of the dial tone at the LEX, yielding a too long time to accumulate sufficient energy to switch the bypass relay and power its control logic.

If there is no POTS service delivered to the user, there is no DC voltage present on the copper pair either, and the PSE can start delivering DC power at once for the DPU to switch the bypass relay. However, some basic initialization protocol is still needed for the DPU to distinguish between DC power from the LEX with very little power available and DC power from the PSE with plenty of power available.

In the European patent publication entitled "Provisioning of New Broadband Communication Services Using Reverse Power Feeding", publication number EP 3 099 005 A1, a solution is described to flawlessly provision new broadband communication services over copper plants with minimal or no human interaction while overcoming the aforementioned issues.

This is achieved by the PSE preliminarily sending successive command signals on the copper pair which contains both the required protocol information to initiate RPF operation, as well as enough electrical energy to power a detection module and to switch the bypass relay at the DPU.

This solution has been adopted by the European Telecommunication Standards Institute (ETSI) in the Technical Specification (TS) entitled "*Access, Terminals, Transmission and Multiplexing (ATTM); European Requirements for Reverse Powering of Remote Access Equipment*" with reference number TS 101 548 (May 2016). An AC signal, referred to as the POTS RCR Protocol (PRP) trigger signal, is superimposed to the DC signal from the POTS, and is used to provide simultaneously power and messages to the DPU to disconnect or reconnect POTS from the LEX. The PRP trigger uses Frequency-Shift Keying (FSK) as modulation scheme. Two carriers within the POTS voice band at respective 1500Hz and 2100Hz modulate the binary values '0' and '1' respectively. The peak-to-peak voltage swing of the AC signal shall be between 17V and 19,2V at the insertion point.

The following background art, which may be regarded as useful for understanding the present invention and its relationship to the prior art, is further acknowledged and briefly discussed.

The International patent application entitled "*Subscriber's Side Powered Telephony System*" filed on September 8, 2004, and published on May 12, 2005 with publication number WO 2005/043880 A1, discloses a system for and a method of providing a telephony service. Supplying power to a node in a telecommunications network from a subscriber's premises conflicts with POTS. Until the advent of the present invention it was thought that supplying power in this way required either an additional electrical transmission wire or providing voice support within a DSL service. In the proposed system telephony control signals, as supplied by an exchange on to a first section of an electrical transmission line, are converted into modified downstream control signals having a different frequency to electrical power, which is supplied onto a second section of the electrical transmission line, and electrical equipment in a node that interconnects the first and second sections can draw electrical power supplied by the power supply without affecting the operation of a telephone.

The ETSI draft ref. ATTMTM6 000040R1 entitled "*POTS RCR Protocol [PRP]*" proposes a revised start-up protocol that supports detection and classification of a DPU for scenarios where POTS from the exchange must be provided to the subscriber, prior to start-up of the DPU.

The European patent application entitled "*Network Element*" filed on March 30, 2016, and published on October 5, 2016 with publication number EP 3076682 A1, discloses a network element comprising at least one switch, which is configurable to connect a subscriber line to a first service line or to a second service line, wherein the connection of the subscriber line to the first service line or to the second service line is configured via a signal conveyed across the second service line.

### Summary of the Invention

It is an object of the present invention to provide an efficient hardware implementation for fast decoding of the PRP trigger signal by the DPU.

In accordance with a first aspect of the invention, a decoding arrangement comprises an analog multiplexer with input terminals coupled to respective subscriber lines, and configured to cross-connect in the analog domain a selected one of the input terminals coupled to a given one of the subscriber lines to an output terminal of the analog multiplexer; an analog detector with an input terminal coupled to the output terminal of the analog multiplexer, and configured to detect the presence of a command signal transiting over the given one subscriber line by characterization of a line voltage present across the given one subscriber line; a decoder with an input terminal coupled to the output terminal of the analog multiplexer, and configured to decode an information payload from the command signal or from a further command signal transiting over the given one subscriber line; and a controller coupled to the analog detector, the decoder and the analog multiplexer, and configured, in the event of the command signal being detected over the given one subscriber line, to enable the decoding of the information payload from the command signal or the further command signal, else to select another one of the input terminals of the analog multiplexer coupled to another one of the subscriber lines as to be cross-connected to the output terminal of the analog multiplexer.

In one embodiment of the invention, the controller enables the decoding of the information payload by controlling the operational status of the input terminal of the decoder.

In one embodiment of the invention, the controller enables the decoding of the information payload by controlling the operational status of the decoder.

In one embodiment of the invention, the command signal is a signal whereby an access node is requested to switch a bypass relay for further insertion over the given one subscriber line of a power feeding signal by a remote power sourcing equipment, and whose electrical energy is accumulated in order to power the decoding arrangement.

In one embodiment of the invention, the analog detector comprises a measuring unit configured to characterize an envelope value or a Root Mean Square RMS value of the line voltage; and a comparator configured to determine whether the so-characterized value exceeds a given threshold, and if so then to positively detect the presence of the command signal.

In one embodiment of the invention, the controller comprises a counter with output terminals coupled to respective control input terminals of the analog multiplexer, and whose value is used to cycle through the input terminals of the analog multiplexer. The controller is further configured, in the event of the command signal being detected over the given one subscriber line, to hold a current counter value for a given period of time, else to change the current counter value.

In one embodiment of the invention, the decoder and the controller forms part of a common processing unit, such as a micro-controller.

Further characterizing embodiments are mentioned in the appended claims.

Such a decoding arrangement typically forms part of an access node making use of RPF, such as a DPU or remotely-deployed DSLAM, as the outcome of the decoding process ultimately determines whether or not DC power extraction is available for a given subscriber line.

The present invention proposes an arrangement for decoding the PRP trigger signal with as little electrical energy as possible. Sequential line scanning is introduced along with an analog detector that initiates the actual FSK demodulation and decoding of the PRP trigger signal. The analog detector checks whether the line voltage is indicative of a PRP trigger signal transiting over that line, for instance by comparing the envelope of the line voltage versus some decision threshold. The demodulation and decoder operation are 'frozen' till the analog detector detects what is likely to be a PRP valid trigger signal, thereby saving the accumulated electrical energy for effective decoding and allowing that energy to be re-used for sensing another line. This implementation will further guarantee the smallest floor space on the Printed Circuit Board (PCB) and the lowest cost as most of the hardware circuitry is shared across all subscriber lines.

### Brief Description of the Drawings

The above and other objects and features of the invention will become more apparent and the invention itself will be best understood by referring to the following description of an embodiment taken in conjunction with the accompanying drawings wherein:
- fig. 1 to 4 represent the successive network topologies of a copper access plant when a communication network is being upgraded from a legacy communication service to a new broadband communication service;
- fig. 5 represents a first implementation of a decoding arrangement as per the present invention;
- fig. 6 represents another advantageous variant for the decoding arrangement; and
- fig. 7 represents a plot versus time of the power consumption of a decoding apparatus as per the present invention.

### Detailed Description of the Invention

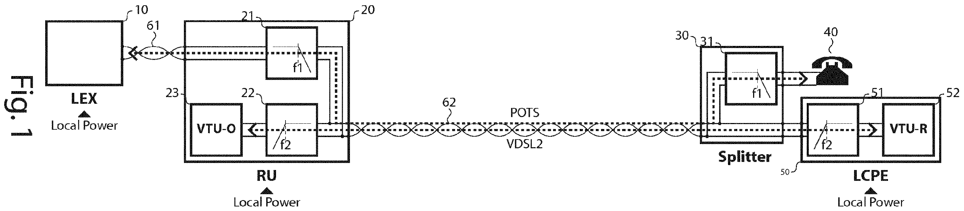

There is seen in fig. 1 a copper access plant comprising the following network elements:
- a LEX 10;
- a RU 20;
- a splitter 30;
- a telephone handset 40; and
- a legacy Customer Premises Equipment (CPE) 50 (or LCPE).

The LEX 10 typically resides at a CO. The RU 20 is typically located within a remote cabinet at some intermediary location along the copper plant. And the splitter 30, the telephone handset 40 and the legacy CPE 50 are all located in the premises of a particular subscriber.

The LEX 10 is coupled to the RU 20 via a first copper pair segment 61, and is for operating POTS. The RU 20 is coupled to the splitter 30 through a second (shorter) copper pair segment 62, and is for operating a legacy broadband communication service, presently VDSL2 communication service.

The RU 20 accommodates a low-pass filter 21 with cut-off frequency f1 and a high-pass filter 22 with cut-off frequency f2 for respectively multiplexing/de-multiplexing the POTS signal and the VDSL2 signal into/from the combined POTS/VDSL2 signal transiting over the second copper pair segment 62. The low-pass filter 21 is coupled to the second copper pair segment 62 and is remotely coupled to the LEX 10 via the first copper pair segment 61. The high-pass filter 22 is coupled to the second copper pair segment 62 and is locally coupled to a VDSL2 transceiver 23 (or VTU-O).

The splitter 30 comprises a low-pass filter 31 with cut-off frequency f1 coupled to the second copper pair segment 62, and is for multiplexing/de-multiplexing the POTS signal into/from the combined POTS/VDSL2 signal transiting over the second copper pair segment 62. The POTS signals is supplied to the telephone handset 40, while the combined POTS/VDSL2 signal is transparently passed to the legacy CPE 50.

The legacy CPE 50 comprises a high-pass filter 51 with cut-off frequency f2 coupled to the second copper pair segment 62 for multiplexing/de-multiplexing the VDSL2 signal into/from the combined POTS/VDSL2 signal transiting over the second copper pair segment 62, and a VDSL2 transceiver 52 (or VTU-R) coupled to the high-pass filter 51.

The VDSL2 transceivers 23 and 52 operate a bi-directional VDSL2 broadband communication channel over the copper pair segment 62. The LEX 10 and the telephone handset 40 operate a bi-directional voice channel via the copper pair segments 61 and 62.

The LEX 10, the RU 20 and the legacy CPE 50 have respective local power supplies available for power feeding, typically 110-240V AC or 48-60V DC.

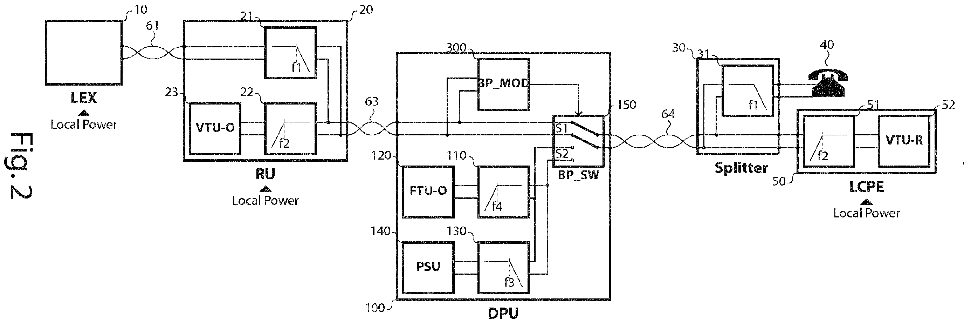

There is seen in fig. 2 the installation of a new network equipment for upgrading the subscriber base to a new broadband communication service offering higher data rates, presently G.fast communication service.

At some point even closer to the subscriber premises, the copper pair segment 62 is split into two segments 63 and 64 for insertion of a DPU 100. The copper pair segment 64 that connects the DPU 100 down to the subscriber premises is referred to as the terminal segment, while the copper pair segment 63 that connects the DPU 100 up to the RU 20 and further up to the LEX 10 is referred to as the network segment.

The DPU 100 comprises:
- a high-pass filter 110 with cut-off frequency f4 for multiplexing/de-multiplexing the G.fast signal into/from the combined DC/G.fast signals transiting over the terminal segment 64;
- a G.fast transceiver 120 (or FTU-O);
- a low-pass filter 130 with cut-off frequency f3 for multiplexing/de-multiplexing the DC power feeding signal into/from the combined DC/G.fast signals transiting over the terminal segment 64;
- a PSU 140 for extracting power from the DC power feeding signals supplied by the various active subscribers and for generating the necessary internal voltage levels for operation of the DPU 100;
- a bypass switch 150 (or BP_SW) with two switching states S1 and S2, such as a latching relay;
- a bypass detection module 300 (or BP_MOD) for controlling the bypass switch 150.

Initially, the splitter 30 and the legacy CPE 50 are still present at subscriber side. The DPU 100 is thus configured in bypass (or transparent) mode: the bypass switch 150 is configured in the switching state S1 wherein the terminal segment 64 is connected to the network segment 63 so as the DPU 100 is fully transparent to the end-users. The subscribers can keep on using the legacy communication services, such as making voice calls with the handset 40 and connecting to the internet through the legacy CPE 50.

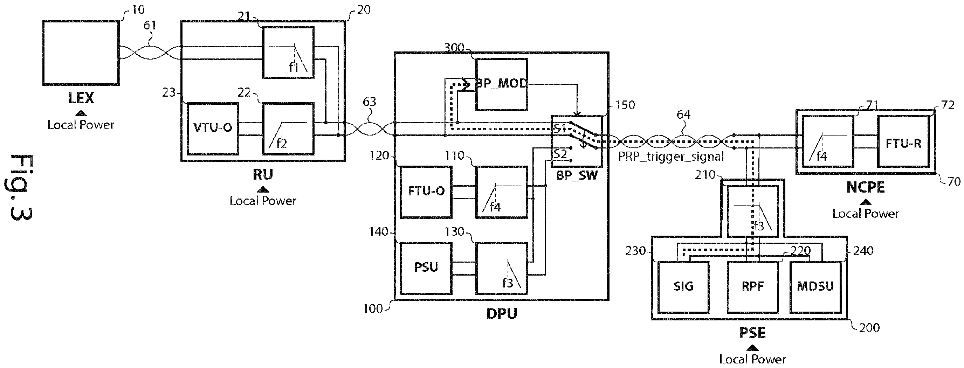

As depicted in fig. 3, a new CPE 70 (or NCPE) supporting the new G.fast communication service is delivered to the subscriber, together with a PSE 200. The CPE 70 and the PSE 200 can be merged within one single equipment. The legacy network equipment 30, 40 and 50 are decommissioned at subscriber side, and replaced by the newly-supplied network equipment 70 and 200.

The new CPE 70 comprises a high-pass filter 71 with cut-off frequency f4 coupled to the terminal segment 64 for multiplexing/de-multiplexing the G.fast signal into/from the combined DC/G.fast signal transiting over the terminal segment 64, and a G.fast transceiver 72 (or FTU-R) coupled to the high-pass filter 71.

The PSE 200 comprises:
- a low-pass filter 210 with cut-off frequency f3,
- a power injector 220 (or RPF);
- a Remote Copper Reconfiguration (RCR) signaling means 230 (or SIG); and
- a signature resistance detector 240 (or MDSU).

The low-pass filter 210 is coupled to the terminal segment 64 in parallel with the new CPE 70. The low-pass filter 210 is further coupled to the power injector 220, to the RCR signaling means 230 and to the signature resistance detector 240.

The power injector 220 is for injecting a DC power feeding signal DC_RPF_signal over the terminal segment 64 for remote power feeding of the DPU 100.

The RCR signaling means 230 is for transmitting a sequence of successive PRP trigger signals PRP_trigger_signal over the terminal segment 64 for instructing the DPU 100 about the availability of the RPF function at subscriber side, and for requesting the DPU to configure the bypass switch 150 in the appropriate switching state, namely S2. In the switching state s2, the terminal segment 64 is connected to the transceiver 120 and to the PSU 140 (i.e., the DPU 100 terminates the terminal segment 64) so as to operate the new G.fast communication service.

The PRP trigger signals are generated by means of Frequency Shift Keying (FSK) modulation with 1500Hz and 2100Hz as carrier frequencies. These two frequencies are situated in the POTS voice band, and the PSE 200 has first to make sure that no OFFHOOK condition is active over the copper pair 64 before transmitting the PRP trigger signals in order not to disturb an ongoing phone call, such as an emergency call.

The RCR signaling means 230 further accommodates a band-pass filter (not shown) to pass frequencies within the voice band, or a fraction thereof, and to attenuate frequencies outside this band.

The amount of energy that needs to be transferred by means of the PRP trigger signals is very limited as the power is only needed for two functions, namely to decode one of the PRP trigger signals transmitted by the PSE 200 over the terminal segment 64, and to provide the necessary current to switch the bypass switch 150 into the switching state S2.

The peak voltage of the PRP trigger signals should however be low enough in order to not trip the safety protection in the LEX 10. The peak-to-peak voltage value of the PRP trigger signal has been standardized as ranging from 17V up to 19,2v, meaning an RMS voltage of about 6v between between the tip and ring of the copper pair. This is sufficient to charge a capacitor in a reasonable amount of time.

The signature resistance detector 240 is for measuring the DC voltage present between the tip and ring of the copper pair 64, and for measuring the DC impedance loading the copper pair 64 following the so-called Metallic Detection Start-Up (MDSU) procedure;

The MDSU requires the injection of one or more intermediary DC voltages over the copper pair 64, and next the measurement of the corresponding DC load impedance in order to detect a particular signature resistance indicative of a PSU being remotely connected to the copper pair 64.

Once the MDSU test is successful, the PSE 200 can start with standardized RPF start-up protocol.

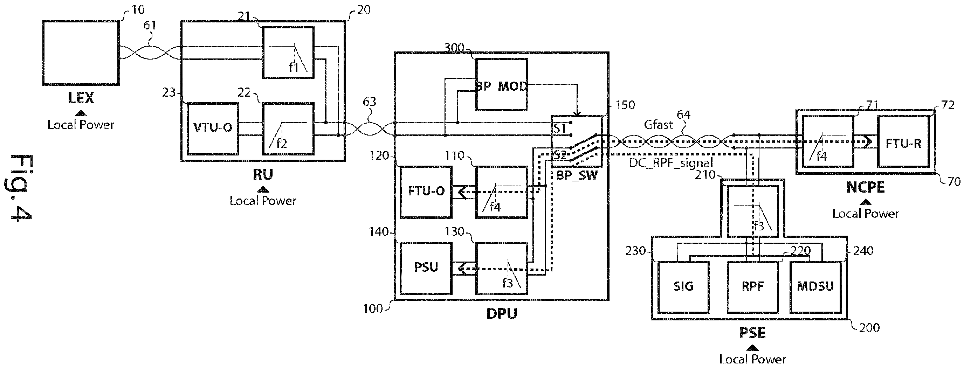

This last step is depicted in fig. 4, wherein a DC power feeding signal DC_RPF_signal is inserted over the terminal segment 64 by the PSE 200. The DC_RPF_signal is used by the PSU 140 (possibly with other DC power feeding signals from other subscribers) for generation of the necessary internal DC voltages (e.g., 12v, 5v and 3v3). These voltages are then distributed to the respective active circuits of the DPU 100 for normal operation of the DPU 100. Thereupon, a G.fast bi-directional communication channel can be established between the transceivers 120 and 72 over the terminal segment 64.

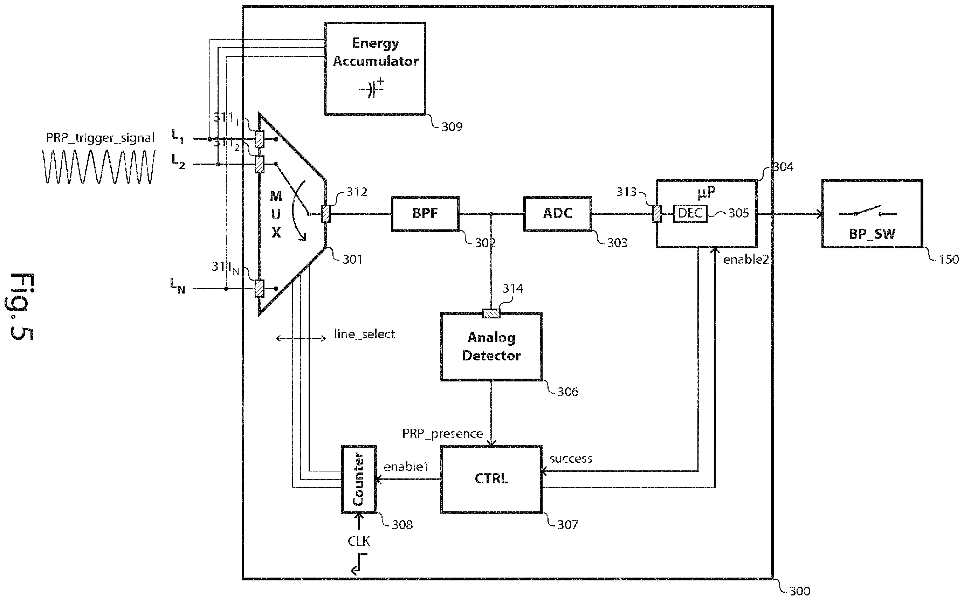

There is seen in fig. 5 further details about the bypass detection module 300.

The bypass detection module 300 is shown as comprising the following hardware and/or functional units:
- an analog multiplexer 301 (or MUX);
- a band-pass filter 302 (or BPF);
- an Analog-to-Digital Converter 303 (or ADC);
- a micro-controller 304 (or µP) embedding a decoder 305 (or DEC);
- an analog detector 306;
- a controller 307 (or CTRL);
- a counter 308; and
- an energy accumulator 309.

The analog multiplexer 301 has input terminals 311₁ to 311_{N} (collectively referred to as 311) coupled to respective subscriber lines L₁ to L_{N}, and an output terminal 312 coupled to the band-pass filter 302. The signal filtered by the band-pass filter 302 is then supplied to the ADC 303 and to an input terminal 314 of the analog detector 306. The digital signal samples at the output of the ADC 303 are supplied to an input terminal 313 of the micro-controller 304, and more specifically to a decoder or decoding routine 305 running on the micro-controller 304 for further decoding of the information payload encoded into the PRP trigger signals. The micro-controller 304 is coupled to and controls the external bypass switch 150 based on the decoded payload and on the PRP protocol requirements. The controller 307 is coupled to the analog detector 306, to the counter 308, and to the micro-controller 304. The energy accumulator 309 is coupled to the subscriber line L₁ to L_{N}.

The energy accumulator 309 generally consists of a bank of electrolytic capacitors for storing an electrical charge, and for basic powering of the bypass detection module 300. A limited amount of power is available from the energy accumulator 309 for detecting a valid PRP trigger signal over a subscriber line, and for switching the bypass switch 150.

Typically, during a first preliminary step, some electrical charge builds up in the energy accumulator 309 from the very first PRP trigger signals that are being transmitted over an initializing line. Next, when the voltage across the capacitors reaches a given voltage value V_{enable}, then the various active hardware circuits of the bypass detection module 300 starts being powered. If no or very little current is being drained, then the charge keeps on increasing up to a maximum voltage value V_{charged}, else the voltage across the capacitors drops as some current is being drained by the various hardware components. If the RCR start-up procedure is successful and a DC power feeding signal is inserted over the initializing line, then the regular PSU 140 substitutes for the energy accumulator 309 for power-feeding of the bypass detection module 300. If no DC power feeding signal is available, then the voltage across the capacitors keeps on dropping and may go past a critical voltage value V_{disable} below which the bypass detection module 300 can no longer be powered. At that stage, some new PRP trigger signals over the same or another line are awaited in order to build up some electrical charges again.

The analog multiplexer 301 is configured to connect a selected one of its input ports 311, presently the input port 3112 coupled to the subscriber line L₂, to the output port 312 based on the line_select binary word value.

The counter 308 cycles through successive binary word values upon each clock tick (see CLK in fig. 5), and outputs corresponding binary word values onto the line_select pins for successively selecting the input terminal 311₁ through 311_{N}, and thus the subscriber lines L₁ through L_{N}, as to be connected to the output terminal 312 of the analog multiplexer 301.

The band-pass filter 302 is for filtering the PRP trigger signals modulated on both 1500Hz and 2100Hz carriers, while disregarding the out-of-band signals and noise.

The ADC 303 is a basic ADC for digital sampling of an analog PRP trigger signals transiting over the subscriber line selected by the analog multiplexer 301. For instance, a 1-bit ADC (or equivalently a comparator) is sufficient for proper FSK decoding of the PRP trigger signals.

The decoder 305 is for decoding a PRP trigger signal transiting over the subscriber line selected by the analog multiplexer 301. Based on the decoded payload, some actions are taken, such as switching the bypass switch 150 into the switching state S1 or S2.

The analog detector 306 is for characterizing the line voltage present over the subscriber line selected by the analog multiplexer 301 after filtering by the band-pass filter 302. For instance, the analog detector 306 comprises a rectifier followed by a low-pass filter for envelope detection of the filtered AC signal, and then a comparator for comparing the envelope voltage value to a predefined threshold in order to guess the presence or the absence of a PRP trigger signal over the selected line. If the envelope voltage value is greater than the threshold, then a PRP trigger signal is likely being transmitted over the selected line and a corresponding PRP_presence = TRUE signal is generated towards the controller 307. Else, if the envelope voltage value is lower than the threshold, then no PRP_trigger signal seems to be transmitted over the selected line and a corresponding PRP_presence = FALSE signal is generated towards the controller 307.

Alternatively, the analog detector 306 can measure the AC RMS voltage value present over the selected line, and compares that RMS value to some threshold in order to decide whether a PRP trigger signal is present or not over the selected line.

Such an analog signal detection is expected to be fast (typically a few ms only) compared to full decoding of the PRP trigger signal. The clock signal CLK driving the counter 308 can thus be adjusted accordingly to allow a rapid sensing of the subscriber lines L₁ through L_{N} within the limited power budget of the energy accumulator 309.

The controller 307 is for controlling the operational status of the counter 308 and of the decoder 305 based on the value of the PRP_presence signal from the analog detector 306.

If the PRP_presence signal has been set to FALSE (no PRP trigger signal on the selected line), then the decoding operation are disabled by setting the enable signal enable2 to FALSE, and the counter 308 keeps on counting by setting the enable signal enable1 to TRUE. The controller 307 may further disable the operation of the ADC 303 (not shown). Consequently, a new subscriber line is selected by the analog multiplexer 301 on the next clock tick for further detection of a PRP trigger signal by the analog detector 306.

If the PRP_presence signal has been set to TRUE (PRP trigger signal present over the selected line), then the current counter value is held for a given period of time by setting the enable signal enable1 to FALSE, and the decoding operations are allowed to start by setting the enable signal enable2 to TRUE. The period of time during which the counter value is frozen shall be long enough for the decoder 305 to fully decode the current or a subsequent PRP trigger signal and to switch the bypass relay 150 (typically a few tens or hundreds ms). If decoding of the PRP trigger signal by the decoder 305 is successful, then a success = TRUE signal is sent back to the controller 307, else a success = FALSE signal is sent back to the controller 307.

The enabling or disabling by the controller 307 of the decoding operation can be performed in various ways. As a first example, the controller 307 can control the power status (or operational status) of the micro-controller 304, meaning to switch the micro-controller 304 OFF (or to put it in some sleeping/idle state) if no PRP trigger signal is detected on the selected line, and to switch the micro-controller 304 ON (or to wake it up from the sleeping/idle state) as soon as a PRP trigger signal is positively detected on the selected line. As a second example, the controller 307 can enable or disable the input terminal 313 through which the digital samples are received.

The power consumption of the various blocks that are active while a PRP trigger signal is being sensed over the successive lines, namely the analog multiplexer 301, the band-pass filter 302, the analog detector 306, the controller 307 and the counter 308, is rather low. Indeed, these blocks accommodates very few active devices (e.g., op-amps, logical gates) that requires very little power, mostly during state transition. Consequently, and considering the very short sensing time, the power consumption of the bypass detection module 300 is very low during that sensing phase.

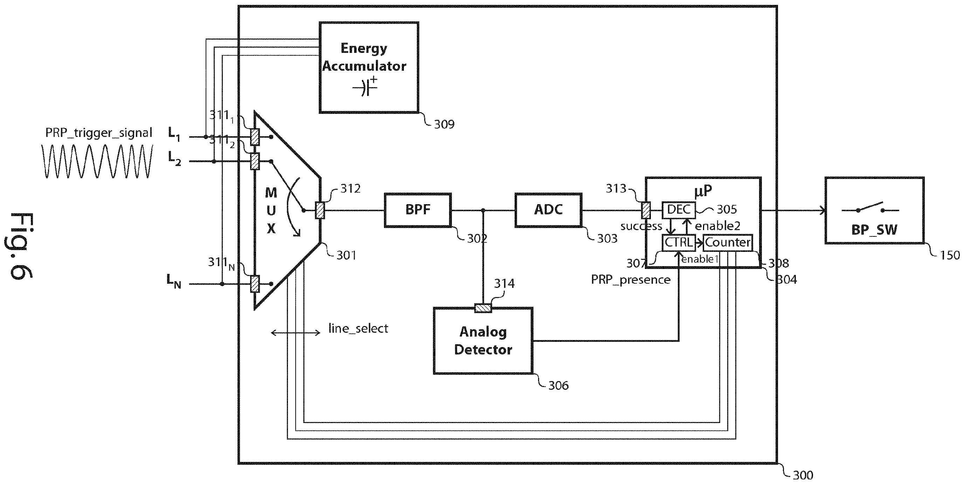

There is seen in fig. 6 an alternative implementation of the bypass detection module 300. In this embodiment, the controller 307 and the counter 308 have been moved to the micro-controller 304, and the analog detector 306 is coupled to the micro-controller 304. The enable1, enable2 and success signals are then messages or signals internal to the micro-controller 304.

Compared to the first embodiment, this embodiment has a lower bill of material and lower floor space, and is thus cheaper. Yet, the control and counting routines shall keep on running in background, meaning that the micro-controller 304 cannot be switched OFF when decoding is not taking place as per the first embodiment, yielding some extra power consumption.

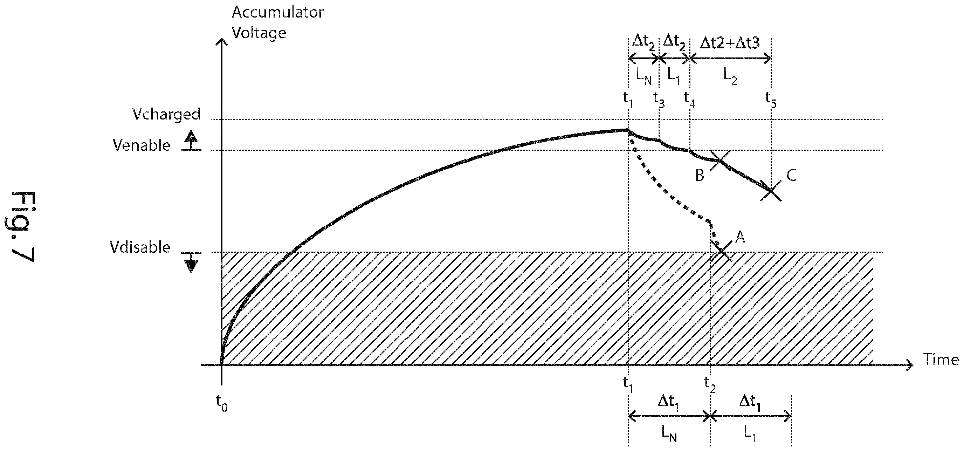

There is seen in fig. 7 a plot of the electrical charge that builds up across the capacitors within the energy accumulator 309. At time to, some PRP trigger signal is being transmitted over a particular line for initiating RPF operation, presently over line L₂. As line L₂ is the very first line to be brought into service, there is no power available from the PSU 140. The electrical energy necessary for initiating the RPF operation (PRP trigger signal decoding, bypass relay switching, etc) is extracted from the PRP trigger signals themselves. Then some electrical charge starts building up in the energy accumulator 309 till the voltage reaches the required voltage Venable. From this time onwards, the bypass detection module 300 can be powered.

At time ti, the sensing phase starts with line L_{N}, for instance if that line was the lastly-selected line before the bypass detection module 300 was switched OFF (and provided the counter 308 holds its current state in some non-volatile memory). Some current starts being drained from the energy accumulator 309, and the voltage drops accordingly.

Without the presence of the analog signal detector 306, the decoder 305 would have to listen to each and every line in an attempt to decode a successful PRP trigger signal. The sensing time Δt1 would then be longer (at least twice the transmission time of a full PRP trigger signal plus some extra margin), and the power consumption would be substantially higher. This situation is depicted with the dotted line. As one can see, the decoder listens to line L_{N} for the successful decoding of a PRP trigger signal, and switches to line L₁ at time t₂=t₁+Δt₁ as no PRP trigger signal has been detected over line L_{N}. Then the voltage drops below the minimum required voltage V_{disable} before the sensing phase over line L₁ completes (see point A in fig. 7), and the whole bypass module 300 is switched off. If the remote PSE keeps on transmitting the PRP trigger signal over line L₂, then some charges builds up again in the energy accumulator 309, and the sensing resumes with line L₁ now, and next line L₂, and again while line L₂ is being sensed, the bypass detection module 300 is switched OFF. At the third attempt, the decoder 305 will eventually be able to successfully decode the PRP trigger signal transmitted over line L2, to switch the bypass relay 150 and to initiate RPF operation over line L₂.

With the presence of the analog detector 306, the sensing time Δt₂ for deciding as per the presence of a PRP trigger signal is far shorter, and the power consumption is substantially lower as the decoding operation do not take place if the PRP trigger signal is not detected, meaning that more lines can be sensed with the same power budget. This situation is depicted with the plain line. The line L_{N} is sensed first. As no PRP trigger signal is detected by the analog detector 306 over line L_{N} during time Δt₂, the analog multiplexer 301 is switched to line L₁ at time t₃=t₁+Δt₂. Again as no PRP trigger signal is detected by the analog detector 306 over line L₁, the analog multiplexer 301 is switched to line L₂ at time t₄=t₃+Δt₂. As one can see, there are still plenty of power available for further sensing and decoding. Now the analog detector 306 detects the presence of a PRP trigger signal over line L₂ (see point B in fig. 7). The controller 307 then enables the decoding operation, and holds the current counter value for a given period of time Δt₃, wherein Δt₃ denotes the necessary time for full decoding of the PRP trigger signal. After successful decoding of the PRP trigger signal (see point C in fig. 7), there are still some power left for switching the bypass relay 150.

Although the above description was primarily concerned with upgrading a data communication system from VDSL2 (with or without POTS) to G.fast, it similarly applies to ADSL or ADSL2+ deployments (with or without POTS) wherein the DSLAM is co-located with the LEX at the CO. The copper pair segment 61 then corresponds to a local connection between the LEX and the CO, typically via a Main Distribution Frame (MDF), and the copper pair segment 62 corresponds to the main subscriber loop spanning from the CO down to the subscriber premises. This subscriber loop is then split into two segments (as per the segments 63 and 64) for insertion of a DPU and G.fast service upgrade.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, Digital Signal Processor (DSP), network processor, Application Specific Integrated Circuit (ASIC), Field Programmable Gate Array (FPGA), etc. Other hardware, conventional and/or custom, such as Read Only Memory (ROM), Random Access Memory (RAM), and non volatile storage, may also be included.

## Claims

1. **A decoding arrangement** (300) comprising:
- **an analog multiplexer** (301) with **input terminals** (311) coupled to respective **subscriber lines** (L₁; L₂; L_{N}), and configured to cross-connect in the analog domain **a selected one of the input terminals** (311₂) coupled to **a given one of the subscriber lines** (L₂) to **an output terminal** (312) of the analog multiplexer;
- **an analog detector** (306) with **an input terminal** (314) coupled to the output terminal of the analog multiplexer, and configured to detect the presence of **a command signal** transiting over the given one subscriber line by characterization of **a line voltage** present across the given one subscriber line;
- **a decoder** (305) with **an input terminal** (313) coupled to the output terminal of the analog multiplexer, and configured to decode **an information payload** from the command signal or from **a further command signal** transiting over the given one subscriber line; and
- **a controller** (307; 308) coupled to the analog detector, the decoder and the analog multiplexer, and configured, in the event of the command signal being detected over the given one subscriber line, to enable the decoding of the information payload from the command signal or the further command signal, else to select **another one of the input terminals of the analog multiplexer** coupled to **another one of the subscriber lines** as to be cross-connected to the output terminal of the analog multiplexer.

2. **A decoding arrangement** (300) according to claim 1, *wherein* the controller enables the decoding of the information payload by controlling the operational status of the input terminal of the decoder.

3. **A decoding arrangement** (300) according to claim 1, *wherein* the controller enables the decoding of the information payload by controlling the operational status of the decoder.

4. **A decoding arrangement** (300) according to claim 1, *wherein* the command signal is a signal whereby **an access node** (100) is requested to switch **a bypass relay** (150) for further insertion over the given one subscriber line of **a power feeding signal** by **a remote power sourcing equipment** (200), and whose electrical energy is accumulated in order to power the decoding arrangement.

5. **A decoding arrangement** (300) according to claim 1, *wherein* the analog detector comprises:
- **a measuring unit** configured to characterize an envelope value or a Root Mean Square RMS value of the line voltage; and
- **a comparator** configured to determine whether the so-characterized value exceeds **a given threshold,** and if so then to positively detect the presence of the command signal.

6. **A decoding arrangement** (300) according to claim 1, *wherein* the controller comprises **a counter** (308) with **output terminals** coupled to respective **control input terminals** of the analog multiplexer, and whose value is used to cycle through the input terminals of the analog multiplexer,
*and wherein* the controller is further configured, in the event of the command signal being detected over the given one subscriber line, to hold **a current counter value** for **a given period of time,** else to change the current counter value to a new value.

7. **A decoding arrangement** (300) according to claim 1, *wherein* the decoder and the controller forms part of **a common processing unit** (304).

8. **An access node** (100) comprising **a decoding arrangement** (300) according to any of claims 1 to 7.

9. **An access node** (100) according to claim 8, wherein the access node is **a Distribution Point Unit DPU** (100) making use of remote power feeding.

10. **An access node** (100) according to claim 8, wherein the access node is **a remotely deployed Digital Subscriber Line Access Multiplexer DSLAM** making use of remote power feeding.

## Patentansprüche

1. Decodierungsanordnung (300), die Folgendes umfasst:
- einen analogen Multiplexer (301) mit Eingangsanschlüssen (311), gekoppelt mit entsprechenden Teilnehmerleitungen (L₁; L₂; L_{N}) und dazu ausgelegt, in der analogen Domäne einen ausgewählten der Eingangsanschlüsse (311₂), gekoppelt mit einer gegebenen der Teilnehmerleitungen (L₂) mit einem Ausgangsanschluss (312) des analogen Multiplexers querzuverbinden;
- einen analogen Detektor (306) mit einem Eingangsanschluss (314), gekoppelt mit dem Ausgangsanschluss des analogen Multiplexers und dazu ausgelegt, die Anwesenheit eines Befehlssignals zu detektieren, das über die gegebene eine Teilnehmerleitung läuft, durch Charakterisierung einer Leitungsspannung, die über der gegebenen einen Teilnehmerleitung vorhanden ist;
- einen Decodierer (305) mit einem Eingangsanschluss (313), gekoppelt mit dem Ausgangsanschluss des analogen Multiplexers und dazu ausgelegt, Informationsnutzdaten aus dem Befehlssignal oder aus einem weiteren Befehlssignal, das über die gegebene eine Teilnehmerleitung läuft, zu decodieren; und
- eine Steuerung (307; 308), gekoppelt mit dem analogen Detektor, dem Decodierer und dem analogen Multiplexer, und dazu ausgelegt, in dem Fall, dass ein Befehlssignal über die gegebene eine Teilnehmerleitung detektiert wird, Decodieren der Informationsnutzdaten aus dem Befehlssignal oder dem weiteren Befehlssignal zu ermöglichen, oder andernfalls einen anderen der Eingangsanschlüsse des analogen Multiplexers, gekoppelt mit einer anderen der Teilnehmerleitungen, als mit dem Ausgangsanschluss des analogen Multiplexers querzuverbinden auszuwählen.

2. Decodierungsanordnung (300) nach Anspruch 1, wobei die Steuerung Decodieren der Informationsnutzlast durch Steuern des Betriebsstatus des Eingangsanschlusses des Decodierers ermöglicht.

3. Decodierungsanordnung (300) nach Anspruch 1, wobei die Steuerung Decodieren der Informationsnutzlast durch Steuern des Betriebsstatus des Decodierers ermöglicht.

4. Decodierungsanordnung (300) nach Anspruch 1, wobei das Befehlssignal ein Signal ist, durch das ein Zugangsknoten (100) aufgefordert wird, ein Umgehungsrelais (150) zu schalten zur weiteren Einspeisung, über die gegebene eine Teilnehmerleitung, eines Stromzufuhrsignals durch eine abgesetzte Stromversorgungsausrüstung (200), und deren elektrische Energie akkumuliert wird, um die Decodierungsanordnung zu betreiben.

5. Decodierungsanordnung (300) nach Anspruch 1, wobei der analoge Detektor Folgendes umfasst:
- eine Messeinheit, dazu ausgelegt, eine Hüllkurve oder einen Effektivwert (RMS, Root Mean Square) der Leitungsspannung zu charakterisieren; und
- einen Vergleicher, dazu ausgelegt zu bestimmen, ob der so charakterisierte Wert eine gegebene Schwelle überschreitet, und wenn dies der Fall ist, die Anwesenheit des Befehlssignals positiv zu detektieren.

6. Decodierungsanordnung (300) nach Anspruch 1, wobei die Steuerung einen Zähler (308) mit Ausgangsanschlüssen, gekoppelt mit entsprechenden Steuereingangsanschlüssen des analogen Multiplexers, umfasst und deren Wert verwendet wird, um nacheinander die Eingangsanschlüsse des analogen Multiplexers zu durchlaufen,
und wobei die Steuerung ferner dazu ausgelegt ist, in dem Fall, dass das Befehlssignal über die gegebene eine Teilnehmerleitung detektiert wird, einen aktuellen Zählerwert für eine gegebene Zeitspanne zu halten, andernfalls den aktuellen Zählerwert auf einen neuen Wert zu ändern.

7. Decodierungsanordnung (300) nach Anspruch 1, wobei der Decodierer und die Steuerung Teil einer gemeinsamen Verarbeitungseinheit (304) bilden.

8. Zugangsknoten (100), umfassend eine Decodierungsanordnung (300) nach einem der Ansprüche 1 bis 7.

9. Zugangsknoten (100) nach Anspruch 8, wobei der Zugangsknoten eine Verteilungspunkteinheit (DPU, Distribution Point Unit) (100) ist, die die abgesetzte Stromzufuhr nutzt.

10. Zugangsknoten (100) nach Anspruch 8, wobei der Zugangsknoten ein abgesetzt umgesetzter DSL-AM-Multiplexer (Digital Subscriber Line Access Multiplexer) ist, der die abgesetzte Stromzufuhr nutzt.

## Revendications

1. **Agencement de décodage** (300) comprenant :
- **un multiplexeur analogique** (301) pourvu de **bornes d'entrée** (311) couplées à des **lignes d'abonné** respectives (L₁ ; L₂ ; L_{N}), et configuré pour effectuer une interconnexion dans le domaine analogique d**'une des bornes d'entrée sélectionnée** (311₂) couplée a **une des lignes d'abonné (L₂)** donnée sur **une borne de sortie** (312) du multiplexeur analogique ;
- **un détecteur analogique** (306) pourvu d**'une borne d'entrée** (314) couplée à la borne de sortie du multiplexeur analogique, et configuré pour détecter la présence d**'un signal de commande** transitant sur la ligne d'abonné donnée par la caractérisation d**'une tension de ligne** présente sur la ligne d'abonné donnée ;
- **un décodeur** (305) pourvu d**'une borne d'entrée** (313) couplée à la borne de sortie du multiplexeur analogique, et configuré pour décoder **une charge utile d'informations** à partir du signal de commande ou à partir d**'un signal de commande supplémentaire** transitant sur la ligne d'abonné donnée ; et
- **un dispositif de contrôle** (307 ; 308) couplé au détecteur analogique, au décodeur et au multiplexeur analogique, et configuré, dans le cas où le signal de commande est détecté sur la ligne d'abonné donnée, de façon à permettre le décodage de la charge utile d'informations à partir du signal de commande ou du signal de commande supplémentaire, et dans le cas contraire, à sélectionner **une autre des bornes d'entrée du multiplexeur analogique** couplée à **une autre des lignes d'abonné** de façon à ce qu'elle soit interconnectée à la borne de sortie du multiplexeur analogique.

2. **Agencement de décodage** (300) selon la revendication 1, *dans lequel* le dispositif de contrôle permet le décodage de la charge utile d'informations en contrôlant l'état de fonctionnement de la borne d'entrée du décodeur.

3. **Agencement de décodage** (300) selon la revendication 1, *dans lequel* le dispositif de contrôle permet le décodage de la charge utile d'informations en contrôlant l'état de fonctionnement du décodeur.

4. **Agencement de décodage** (300) selon la revendication 1, *dans lequel* le signal de commande est un signal par lequel **un noeud d'accès** (100) est invité à faire commuter **un relais de dérivation** (150) pour une insertion ultérieure sur la ligne d'abonné donnée d**'un signal d'alimentation en énergie par un équipement de source d'énergie distant** (200), et dont l'énergie électrique est accumulée pour alimenter l'agencement de décodage.

5. **Agencement de décodage** (300) selon la revendication 1, *dans lequel* le détecteur analogique comprend :
- **une unité de mesure** configurée pour caractériser une valeur d'enveloppe ou une valeur efficace quadratique moyenne RMS (Root Mean Square) de la tension de ligne ; et
- **un comparateur** configuré pour déterminer si la valeur ainsi **caractérisée** dépasse **un seuil donné,** et si tel est le cas, détecter positivement la présence du signal de commande.

6. **Agencement de décodage** (300) selon la revendication 1, *dans lequel* le dispositif de contrôle comprend **un compteur** (308) pourvu de **bornes de sortie** couplées à des **bornes d'entrée de contrôle** respectives du multiplexeur analogique et dont la valeur est utilisée pour balayer de façon cyclique les bornes d'entrée du multiplexeur analogique,
*et dans lequel* le dispositif de contrôle est en outre configuré, dans le cas où le signal de commande est détecté sur la ligne d'abonné donnée, pour conserver **une valeur actuelle du compteur** pendant **une période de temps donnée,** et dans le cas contraire pour changer la valeur actuelle du compteur en une nouvelle valeur.

7. **Agencement de décodage** (300) selon la revendication 1, *dans lequel* le décodeur et le dispositif de contrôle font partie d**'une unité de traitement commune** (304).

8. **Noeud d'accès** (100) comprenant **un agencement de décodage** (300) selon l'une quelconque des revendications 1 à 7.

9. **Noeud d'accès** (100) selon la revendication 8, dans lequel le noeud d'accès est **une unité de point de distribution DPU (Distribution Point Unit)** (100) utilisant l'alimentation à distance.

10. **Noeud d'accès** (100) selon la revendication 8, dans lequel le noeud d'accès est **un multiplexeur d'accès à la ligne d'abonné numérique DSLAM (Digital Subscriber Line Access Multiplexer) déployé à distance** utilisant l'alimentation à distance.
